(19) Europäisches Patentamt
European Patent Office
Office européen des brevets

(11) **EP 2 504 832 B1**

(12) **FASCICULE DE BREVET EUROPEEN**

(45) Date de publication et mention
de la délivrance du brevet:
**23.08.2017 Bulletin 2017/34**

(21) Numéro de dépôt: **10788360.5**

(22) Date de dépôt: **28.10.2010**

(51) Int Cl.:
*G10K 11/172* (2006.01)   *F02C 7/045* (2006.01)
*B32B 3/14* (2006.01)   *B32B 3/18* (2006.01)
*F02K 1/82* (2006.01)

(86) Numéro de dépôt international:
**PCT/FR2010/052311**

(87) Numéro de publication internationale:
**WO 2011/061430 (26.05.2011 Gazette 2011/21)**

(54) **PANNEAU ACOUSTIQUE POUR NACELLE D'AERONEF ET PROCÉDÉ DE FABRICATION CORRESPONDANT**

AKUSTISCHE PLATTE FÜR EINE TRIEBWERKSGONDEL EINES FLUGZEUGES UND ENSPRECHENDES HERSTELLUNGSVERFAHREN

ACOUSTIC PANEL FOR AN AIRCRAFT NACELLE AND CORRESPONDING MANUFACTURING PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2009 FR 0905605**

(43) Date de publication de la demande:
**03.10.2012 Bulletin 2012/40**

(73) Titulaire: **Safran Nacelles**
**76700 Gonfreville-l'Orcher (FR)**

(72) Inventeurs:
• **DREVON, Emmanuel**
**F-76280 Anglesqueville l'Esneval (FR)**
• **RAMAIN, Jean**
**F-76280 Villainville (FR)**
• **TISSOT, Aurélien**
**F-76600 Le Havre (FR)**

(74) Mandataire: **Gaillarde, Frédéric F. Ch. et al**
**Cabinet Germain & Maureau**
**31-33, rue de la Baume**
**75008 Paris (FR)**

(56) Documents cités:
**EP-A1- 0 897 174**   **EP-A1- 1 111 584**
**US-A1- 2002 157 764**   **US-A1- 2007 154 698**

EP 2 504 832 B1

**Description**

La présente invention concerne une peau acoustique pour un panneau acoustique d'une nacelle d'aéronef.

L'invention concerne également un panneau acoustique comprenant une telle peau, le procédé de fabrication de ladite peau ainsi qu'une tête de drapage pour mettre en oeuvre le procédé.

Les turboréacteurs d'avion sont générateurs d'une pollution sonore importante. Il existe une forte demande visant à réduire cette pollution, et ce d'autant plus que les turboréacteurs utilisés deviennent de plus en plus puissants. La conception de la nacelle entourant un turboréacteur contribue pour une grande partie à la réduction de cette pollution sonore.

Afin d'améliorer davantage les performances acoustiques des aéronefs, les nacelles sont dotées de panneaux acoustiques visant à atténuer les bruits générés par les turboréacteurs.

Les panneaux acoustiques sont des structures de type sandwich bien connues pour absorber ces bruits. Ces panneaux comportent habituellement une ou plusieurs couches de structure à âme alvéolaire (structure couramment appelée « en nid d'abeille »). Ces couches sont généralement revêtues sur leur face dite externe, d'une peau imperméable à l'air, dite « pleine », et sur leur face interne, c'est-à-dire en contact avec l'écoulement d'air et l'excitation sonore à l'intérieur du moteur, d'une peau perforée perméable à l'air, dite « acoustique ». De tels panneaux acoustiques sont divulgués dans le document EP 1 111 584 A1. Le panneau acoustique peut comprendre en outre plusieurs couches de structure piégeant le bruit, notamment à âme alvéolaire, entre lesquelles se situe une peau multiperforée dite « septum ». Cette peau est généralement collée entre les structures piégeant le bruit par polymérisation lors de la phase d'assemblage / collage du panneau.

Le panneau acoustique est ensuite assemblé en disposant les différentes peaux et couches puis encollées sur un moule à la forme requise. L'ensemble subit une cuisson dans un four de manière à serrer les couches et à polymériser les adhésifs.

De tels panneaux constituent des résonateurs acoustiques aptes à « piéger » le bruit et donc à atténuer les émissions sonores en direction de l'extérieur de la nacelle.

Typiquement, les panneaux acoustiques sont réalisés dans des matériaux composites. Ainsi, la peau acoustique est généralement constituée de plis de tissus de fibre de carbone préimprégnés de résine de type époxyde ou bismaléimide, par exemple, qui sont drapés manuellement. Après l'étape de drapage, la peau est cuite sous pression pour polymériser la résine, puis perforée de multiples ouvertures acoustiques selon un taux de perforation défini. Dans ce cas, certaines fibres sont coupées lors de l'opération de perçage, ce qui a pour effet de dégrader la résistance mécanique de la peau acoustique et donc du panneau acoustique comprenant ladite peau.

Il existe une alternative qui consiste à draper les plis de manière automatique, en utilisant, non plus des tissus de fibre de carbone, mais des rubans de fibre de carbone unidirectionnels, préimprégnés de résine. Le drapage est alors réalisé de manière automatique. En effet, les rubans sont déposés en les juxtaposant ou en les recouvrant partiellement les uns avec les autres. Après cette étape de dépose, la peau est ensuite cuite sous pression pour polymériser la résine, comme ci-dessus, puis percée. Les opérations distinctes de dépose et de perçage sont donc maintenues. Il en est de même pour la diminution de la résistance mécanique due à la rupture de certaines fibres.

En outre, l'étape de perçage tel que réalisé traditionnellement engendre une perte importante de matière de la peau fabriquée, pouvant aller jusqu'à 40% de la matière totale. Le nombre de déchets de fibres est donc important ce qui nécessite de prévoir une quantité importante de matière. En outre, il est nécessaire d'installer des moyens de protection spécifiques contraignant, tels que l'aspiration de poussières car ces dernières sont dangereuses pour la santé des opérateurs.

Un but de la présente invention est donc de fournir une peau acoustique composite pour un panneau acoustique d'une nacelle qui présente une meilleure résistance mécanique et dont la fabrication ne présente pas les inconvénients précités.

A cet effet, selon un premier aspect, l'invention a pour objet un panneau acoustique d'une nacelle d'aéronef, ladite peau comprenant une pluralité de couches empilées de rubans plans composites dirigés chacun par leur axe longitudinal définissant une direction, les axes longitudinaux des rubans d'une même couche étant parallèles entre eux, lesdits rubans de ladite même couche étant espacés les uns des autres de sorte à présenter des ouvertures acoustiques dans la peau acoustique.

On entend par « ruban » un ensemble plan de fibres préimpregnées arrangées de sorte à présenter un axe longitudinal définissant la direction dudit ensemble, et de largeur définie.

On entend ici par « longitudinal » la direction suivant la longueur du ruban et « transversal » la direction suivant la largeur du ruban, étant entendu que la longueur du ruban est supérieure à la largeur de ce dernier.

On définit ici « plan médian longitudinal » comme étant le plan passant par la droite du milieu du ruban selon la direction longitudinale de ce dernier.

La peau acoustique de l'invention est ainsi composée d'une multitude de rubans de matériau composite drapés selon une ou plusieurs directions de sorte à obtenir une peau acoustique ajourée à l'issue de la phase de drapage selon une densité d'ouvertures ou encore « taux d'ouverture » définie. L'opération de perçage acoustique est ainsi supprimée. De ce fait, toutes les fibres de la peau acoustique sont intactes, continues et non percées, permettant de conserver l'intégrité desdites fibres. La résistance mécanique de la peau acoustique n'est donc pas dégradée au cours de la formation de la peau acoustique.

En outre, l'absence d'étape de perçage réduit de manière importante les coûts associés ainsi que les déchets de matière. Par conséquent, il n'est plus nécessaire d'installer des moyens de protection spécifiques contraignant, tels que l'aspiration de poussières. En outre, le nombre de déchets de fibre est limité ce qui permet d'ajuster au mieux l'approvisionnement de matière.

Ainsi, la peau acoustique de l'invention présente l'avantage d'être réalisée en un nombre d'étapes limité en fusionnant les étapes de dépose des rubans et de création d'ouvertures acoustiques. On limite ainsi le coût de fabrication.

Selon d'autres caractéristiques de l'invention, la peau de l'invention comporte l'une ou plusieurs des caractéristiques optionnelles suivantes considérées seules ou selon toutes les combinaisons possibles :

- les axes longitudinaux des rubans de deux couches différentes, adjacentes ou non, forment un angle non nul ce qui permet d'ajuster le taux d'ouverture;
- les rubans ont une largeur identique et l'espacement entre les rubans d'une même couche est un multiple de la largeur des rubans ce qui permet d'utiliser les outils de drapage automatique actuels ;
- les rubans de couches différentes d'axes longitudinaux parallèles sont disposés de sorte que les plans médians longitudinaux de deux rubans appartenant aux deux couches différentes sont confondus ;
- une série de plusieurs couches est décalée angulairement par rapport à une série adjacente selon un angle déterminé par rapport à la position où les plans médians longitudinaux de deux rubans appartenant à deux couches des deux séries différentes sont confondus ;
- une série de plusieurs couches est décalée latéralement d'une distance non nulle par rapport à une série différente, adjacente ou non, de sorte que les plans médians longitudinaux de deux rubans appartenant à deux couches des deux séries différentes soient distincts ;
- le taux d'ouverture est compris entre 1 % et 50%.

Selon un second aspect, l'invention a pour objet un panneau acoustique comprenant au moins une structure apte à piéger le bruit, une peau pleine sans ouverture acoustique et une peau acoustique de l'invention en contact avec ladite structure.

Selon un autre aspect, l'invention a pour objet un procédé de fabrication de la peau acoustique de l'invention comprenant:

- l'étape A dans laquelle on dépose une multitude de couches, chaque couche ayant des rubans préimprégnés de résine et espacés les uns des autres selon une même direction définie par les axes longitudinaux des rubans ; puis
- l'étape B dans laquelle on polymérise la résine contenue dans les rubans de sorte à former la peau acoustique.

Préférentiellement, l'étape A comprend :

- l'étape A1 dans laquelle on dépose des premiers rubans espacés les uns des autres selon une première direction afin de former une première couche ;
- l'étape A2 dans laquelle on dépose sur ladite première couche des deuxièmes rubans espacés les uns des autres selon une deuxième direction afin de former une deuxième couche ;
- l'étape A3 dans laquelle on dépose sur la couche ainsi obtenue des rubans espacés les uns des autres selon une autre direction différente de la direction de la couche immédiatement adjacente afin de former une autre couche ;
- l'étape A4 dans laquelle on répète l'étape A3 sur les couches déjà déposées de sorte à obtenir un taux d'ouverture compris entre 8% et 20% dans la peau acoustique finale.

Préférentiellement, le procédé de l'invention comprend une étape supplémentaire dans laquelle on décale latéralement d'une distance non nulle ou angulairement d'un angle non nul au moins deux couches différentes de rubans de même direction de sorte que les plans médians longitudinaux des rubans desdites couches soient distincts.

Préférentiellement, le procédé de l'invention comprend les étapes supplémentaires dans laquelle, sur les bordures de la peau acoustique, on dépose des rubans juxtaposés les uns aux autres parallèlement à l'axe longitudinal des rubans espacés puis on espace les rubans de sorte à obtenir une zone présentant des ouvertures acoustiques. Ceci permet de conférer à la peau acoustique ainsi réalisée, des caractéristiques mécaniques améliorées en bordure de celle-ci.

Selon encore un autre aspect, l'invention a pour objet une tête de drapage pour mettre en oeuvre le procédé de l'invention, ladite tête comprenant une première partie apte à déposer des rubans selon un premier espacement et une seconde partie apte à déposer des rubans selon un deuxième espacement différent du premier espacement. Cet arrangement particulier de la tête de dépose permet d'obtenir plus de degrés de libertés dans la conception du drapage afin d'obtenir simultanément le nombre de couches de rubans souhaité ainsi que le taux d'ouverture souhaité.

Préférentiellement, le premier espacement est égal à un multiple entier de la largeur des rubans.

Préférentiellement, le deuxième espacement n'est pas un multiple entier de la largeur des rubans.

L'invention sera davantage comprise à la lecture de la description non limitative qui va suivre, faite en référence aux figures ci-annexées.

- La figure 1 est une représentation schématique en coupe longitudinale d'un premier mode de réalisation d'une nacelle selon l'invention ;
- la figure 2 est une coupe transversale d'un mode de réalisation d'un panneau acoustique de l'invention;
- la figure 3 est une vue schématique de dessus d'un mode de dépose d'une peau de l'invention ;
- les figures 4 à 6 sont des vues schématiques de dessus de variantes du mode de réalisation de la figure 3 ;
- la figure 7 est une vue schématique de dessus d'une variante du mode de réalisation de la figure 3 ;
- les figures 8 à 13 sont des variantes du mode de réalisation de la figure 7 ;
- les figures 14 et 15 sont des vues de dessus d'autres modes de réalisation de la peau de l'invention.

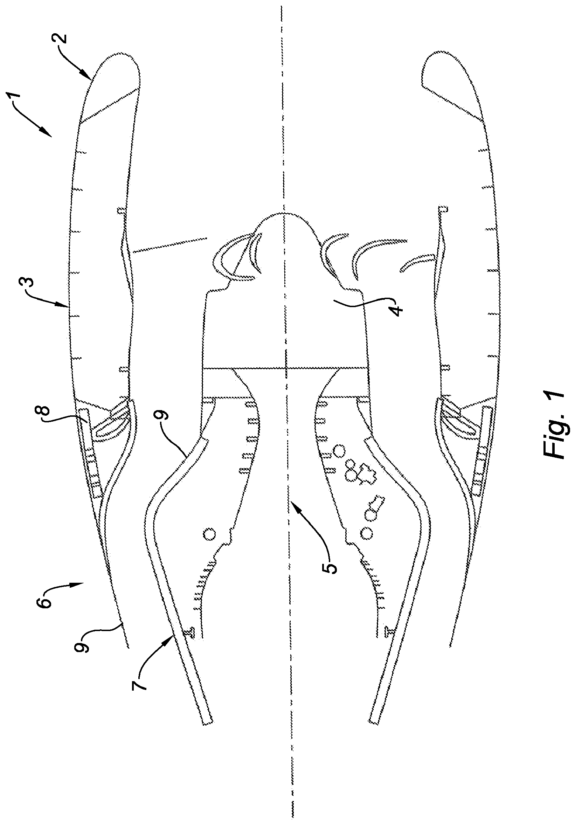

Selon le mode de réalisation représenté à la figure 1, une nacelle 1 selon l'invention comprend une structure amont d'entrée d'air 2, une structure médiane 3 entourant une soufflante 4 d'un turboréacteur 5, et une structure aval. La structure aval comporte de manière connue en soi une structure externe 6, dite OFS, abritant des moyens d'inversion de poussée 8, et une structure interne 9, dite IFS. La nacelle 1 selon l'invention est fixée en aval par l'intermédiaire de tout moyen approprié, notamment de bielles, à un mât de suspension, non représenté, destiné au rattachement de la nacelle 1 sous une aile d'aéronef.

La structure externe 6 et la structure interne 9 définissent également un canal annulaire d'écoulement.

La structure interne 9 est destinée à couvrir une partie aval du turboréacteur 5 s'étendant en aval de la soufflante.

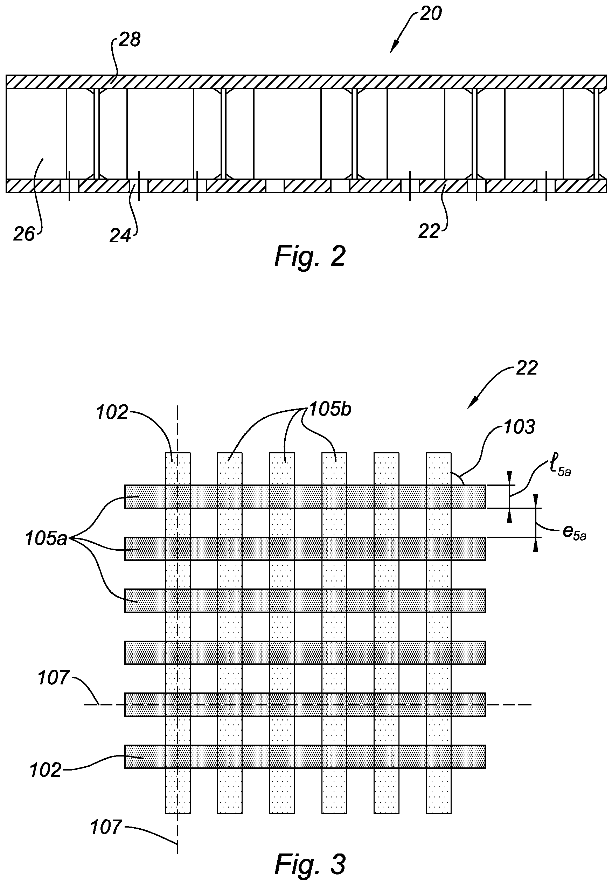

Certaines parties de la nacelle 1 de l'invention nécessitent d'être agencées de sorte à atténuer le bruit engendré par le turboréacteur 5. Pour cela, lesdites parties comportent un ou plusieurs panneaux acoustiques. Selon un mode de réalisation de panneau acoustique représenté à la figure 2, le panneau acoustique 20 de l'invention comporte une peau acoustique 22 destinée à être montée sur la nacelle 1 du côté du flux d'air présent dans le canal annulaire d'écoulement. Cette peau acoustique 22 présente des ouvertures 24 par lequel pénètre le bruit. La dimension des ouvertures 24 ainsi que leur espacement sont définis de manière à ce que le rapport entre la surface ouverte et la surface totale comprenant les ouvertures 24 permette l'absorption du bruit souhaité.

Sur cette peau acoustique 22 se trouve une structure 26 apte à piéger le bruit, notamment à âme alvéolaire ou en mousse. Dans le cas d'une structure à âme alvéolaire, cette dernière est typiquement fabriquée dans un alliage léger, tel que l'aluminium.

Sur cette structure 26 se trouve une peau pleine 28 non perforée et non acoustique destinée à fermer les cellules alvéolaires absorbantes de la structure 26.

Ces trois couches 22, 26 et 28 sont notamment fixées les unes aux autres par collage ou tout autre moyen d'assemblage.

Les peaux acoustiques 22 et pleines 28 sont réalisées en un matériau à base de fibres de carbone et/ou de verre.

Selon l'invention, la peau acoustique 22 comprend une pluralité de couches empilées de rubans plans composites dirigés chacun par leur axe longitudinal définissant une direction, les axes longitudinaux des rubans d'une même couche étant parallèles entre eux, lesdits rubans de ladite même couche étant espacés les uns des autres de sorte à présenter des ouvertures acoustiques dans la peau acoustique.

Ainsi, les rubans de fibres préimprégnées de résine ne sont pas joints bord à bord ou par chevauchement, mais présentent un espacement entre eux. En d'autres termes, les rubans d'une même couche ne sont pas en contact les uns avec les autres. L'alternance des couches est réalisée de sorte à obtenir des ouvertures acoustiques dans lesquelles le bruit est capable de pénétrer.

La résine employée pour préimprégner les fibres composites est polymérisable à une température comprise entre 50 et 250°C. La polymérisation de la résine à pour effet de former une matrice donnant de la cohésion à la peau de l'invention. Néanmoins, l'étape de polymérisation est réalisée sans obstruer les ouvertures acoustiques formées lors de l'étape de dépose des rubans. La résine peut être choisie parmi les résines thermodurcissables telles que les résines époxyde ou bismaléimide.

Typiquement, le nombre de couches d'une peau de l'invention est compris entre 3 et 20, selon la résistance mécanique exigée.

Chaque ruban d'une couche présente un axe longitudinal définissant la direction dudit ruban.

Typiquement, la longueur suivant l'axe longitudinal d'un ruban est supérieure à 50mm. La longueur maximale correspond à la longueur de la peau acoustique à draper, soit plusieurs mètres. La largeur suivant l'axe transverse d'un ruban est comprise entre 1 mm et 20mm, voire entre 2 mm et 4 mm.

Les rubans de deux couches différentes, immédiatement adjacentes ou non, peuvent avoir leurs axes longitudinaux formant un angle non nul entre eux, notamment compris entre 0° et 90°, voire égal à environ 45° ou à environ 60°. En d'autres termes, lesdits rubans peuvent présenter une direction différente ce qui permet d'ajuster le nombre d'ouvertures acoustiques et également la résistance mécanique de la peau acoustique 22 ainsi obtenue. On définit alors le « taux d'ouverture » comme le rapport de la surface occupée par les ouvertures acoustiques sur la surface totale de la peau acoustique.

Le taux d'ouverture dépend de la manière dont les rubans sont drapés, à savoir si les axes longitudinaux des rubans de deux couches adjacentes sont colinéaires ou non, et également de l'orientation de l'empilement des couches.

Dans le cas où les rubans de couches différentes sont drapés dans une seule direction (non représenté), à savoir les axes longitudinaux forment un angle sensiblement nul entre deux couches adjacentes, le taux d'ouverture peut aller jusqu'à une valeur égale à 50% lorsque la distance entre deux rubans consécutifs est égale à la largeur d'un ruban. Dans le cas où les couches sont empilées en décalant angulairement et/ou latéralement certaines couches, le taux d'ouverture diminue et devient inférieur à 50%.

On entend ici par « décalage latéral », un décalage se faisant à partir de la position où les plans médians longitudinaux de deux rubans appartenant à deux couches différentes sont confondus puis on décale la couche à décaler suivant un axe colinéaire aux plans formés par les couches de rubans. Dans un cas particulier, le décalage latéral peut être réalisé suivant l'axe perpendiculaire et coplanaire à l'axe longitudinal des rubans de la couche à décaler. Typiquement, le décalage est réalisé sur une distance comprise entre 0 mm et la période géométrique du motif de dépose de rubans. On forme alors des ouvertures plus nombreuses et plus petites que si les couches étaient empilées en se superposant sensiblement tout en conservant la même forme géométrique.

On entend ici par « décalage angulaire » un décalage réalisé à partir de la position où les plans médians longitudinaux de deux rubans appartenant à deux couches différentes sont confondus puis on pivote la couche à décaler jusqu'à l'angle désiré, par exemple, 30°, 45° ou 60° par rapport à la position. De même, on forme alors des ouvertures plus nombreuses et plus petites que si les couches étaient empilées en se superposant sensiblement avec généralement des formes géométriques différentes.

Il est, ainsi, possible de faire varier par un décalage angulaire ou latéral d'une couche ou de plusieurs couches la valeur du taux d'ouverture, la forme des ouvertures et la taille de ces dernières, de même que la direction de meilleure résistance mécanique des fibres. Par exemple, on peut décaler une couche sur deux, une couche sur quatre ou encore une couche sur six. Typiquement, on définit une pluralité de séries de couches comportant au moins deux couches adjacentes. Ainsi, on peut avoir deux séries ou plus, notamment trois, quatre ou cinq séries. Au moins une série est décalée angulairement ou latéralement par rapport à une autre série.

De manière avantageuse, dans ce cas, le taux d'ouverture peut être adapté au besoin en utilisant un même moyen de drapage pour réaliser différentes peaux acoustiques présentant des taux d'ouverture différents.

Comme illustré sur la figure 3, la peau acoustique 22 est composée d'une pluralité de couches 105a et 105b empilées selon un angle 103 entre les axes longitudinaux 107 des rubans 102 des deux couches 105a et 105b immédiatement adjacentes égal à environ 90°.

Dans ce cas, le taux d'ouverture POA est calculé comme suit :

$$POA = (e_{5a} * e_{5b}) / [(l_{5a} + e_{5a}) * (l_{5b} + e_{5b})]$$

Avec $l_{5a}$ et $l_{5b}$ étant la largeur des rubans de deux couches 105a et 105b immédiatement adjacentes et $e_{5a}$ et $e_{5b}$ étant l'espacement entre deux rubans 102 d'une même couche 105a et 105b. On définit ici « l'espacement » comme la distance entre deux bords de deux rubans adjacents, la distance étant prise perpendiculairement à l'axe longitudinal des rubans.

Par conséquent, le taux d'ouverture dépend des valeurs données aux paramètres $l_{5a}$, $l_{5b}$, $e_{5a}$ et $e_{5b}$.

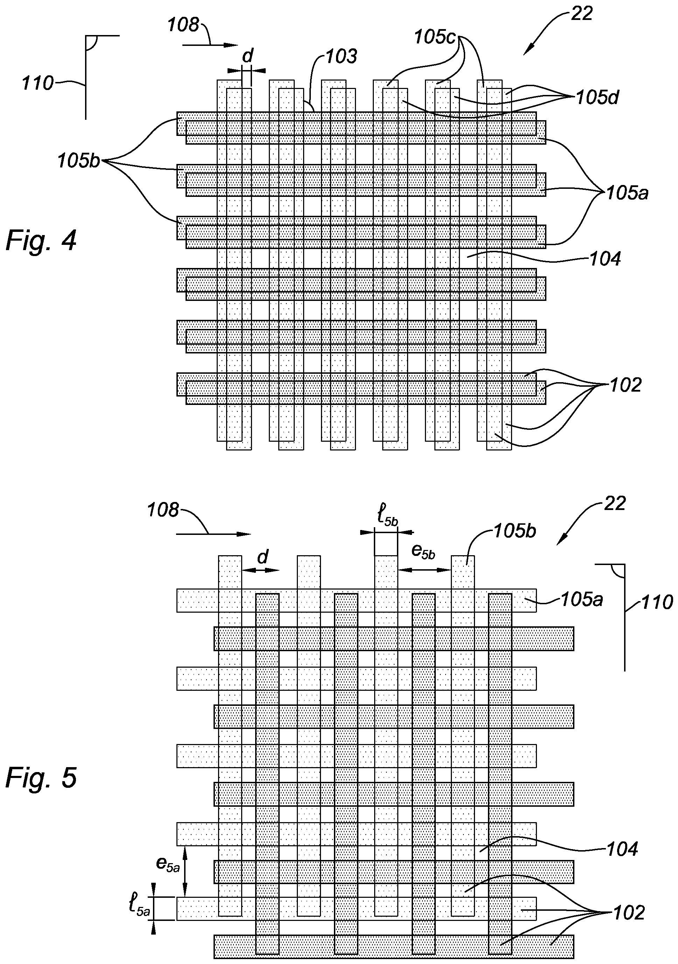

Typiquement, les rubans 102 peuvent avoir une largeur $l_{5a}$, $l_{5b}$ identique. Dans ce cas, l'espacement $e_{5a}$, $e_{5b}$ entre les rubans 102 d'une même couche 105a et respectivement 105b peut alors être un multiple entier de la largeur $l_{5a}$, $l_{5b}$ des rubans, par exemple 2, 3 ou 4 (voir figure 5). Au contraire, l'espacement $e_{5a}$, $e_{5b}$ entre les rubans 102 peut ne pas être un multiple entier de la largeur $l_{5a}$, $l_{5b}$ desdits rubans, ce qui se produit typiquement lors d'un décalage latéral. Dans ce cas, l'espacement peut prendre des valeurs discrètes égales à (n-1)/2 fois la largeur d'un ruban avec n étant un entier égal au nombre de rubans non déposés entre 2 rubans consécutifs d'une même couche.

Dans le cas où l'espacement $e_{5a}$, $e_{5b}$ des rubans d'une même couche 105a, 105b est égal à un multiple de la largeur $l_{5a}$, $l_{5b}$ desdits rubans, on peut de manière avantageuse conserver les outils de drapage usuels.

Ainsi, dans le cas de la figure 3, à savoir dans le cas où les paramètres $l_{5a}$, $l_{5b}$, $e_{5a}$ et $e_{5b}$ sont égaux, le taux d'ouverture est égal à environ 25%.

Comme représenté sur les figures 4 et 5, les rubans 102 ont des axes longitudinaux colinéaires à ceux du cas de la figure 3 mais deux couches 105c et 105d sur quatre couches 105a, 105b et 105c, 105d sont décalées latéralement d'une distance non nulle. Le décalage est réalisé de manière latérale à savoir selon une direction 108 coplanaire au plan 110 formé par les couches 105a, 105b, 105c et 105d. Dans ce cas, le décalage est réalisé sur une distance non nulle inférieure à l'espacement $e_{5a}$ et $e_{5b}$. Il est alors possible d'obtenir un taux d'ouverture compris entre 0% et 25% et donc intermédiaire à celui du mode de réalisation de la figure 3.

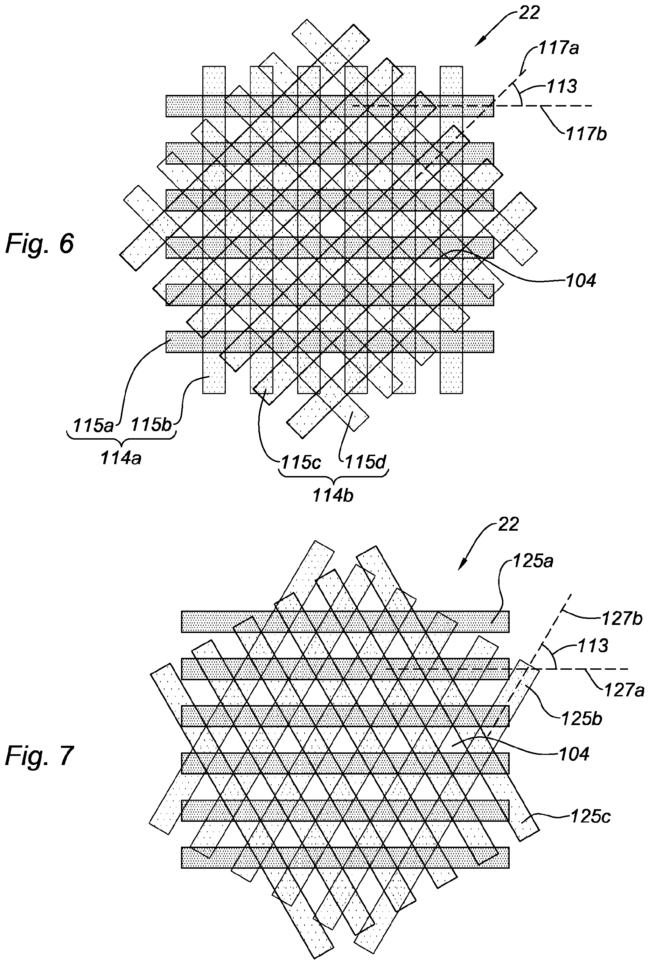

Comme représenté à la figure 6, dans le cas d'un décalage angulaire de plusieurs couches 115a, 115b, 115c et 115d, on définit une première série 114a de couches 115a, 115b et une seconde série 114b de couches 115c, 115d dans lesquelles les couches immédiatement adjacentes 115a, 115c et 115b, 115d ont des rubans 102 espacés qui sont disposés de manière sensiblement perpendiculaire.

La deuxième série 114b de couches 115c, 115d est décalée d'un angle 113 sensiblement égal à 45°, l'angle 113 correspondant alors à celui formé par les deux axes longitudinaux 117a et 117b des rubans appartenant à une couche décalée 115c et une couche non décalée 115a.

Ce mode de réalisation permet avantageusement d'améliorer l'isotropie de la résistance mécanique de la peau acoustique 22.

Selon un autre mode de réalisation représenté à la figure 7, la peau acoustique 22 peut être formée d'un empilement de couches 125a, 125b et 125c dont les rubans 102 sont disposés en formant un angle 113 sensiblement égal à 60° correspondant à l'angle formé par les axes longitudinaux 127a et 127b de deux rubans appartenant à deux couches 125a et 125b immédiatement adjacentes. Dans le cas de la figure 7, l'espacement entre chaque ruban 102 est sensiblement égal à la largeur d'un ruban 102.

L'avantage d'une telle configuration réside dans le fait que l'on conserve l'isotropie du matériau. En outre, il est possible de conserver les outils de drapage actuels.

Dans cette configuration, le taux d'ouverture est typiquement compris entre 6,25% et 18,75%, ce taux dépendant principalement de l'empilement comme pour le cas d'une configuration à 90° comme représenté aux figures 3 à 6. Ainsi, si chaque couche 125a, 125b ou 125c est formée avec des rubans 102 dont l'espacement est égal à sensiblement la largeur d'un ruban, alors le taux d'ouverture est égal à 12,5%, comme cela est le cas de la figure 7.

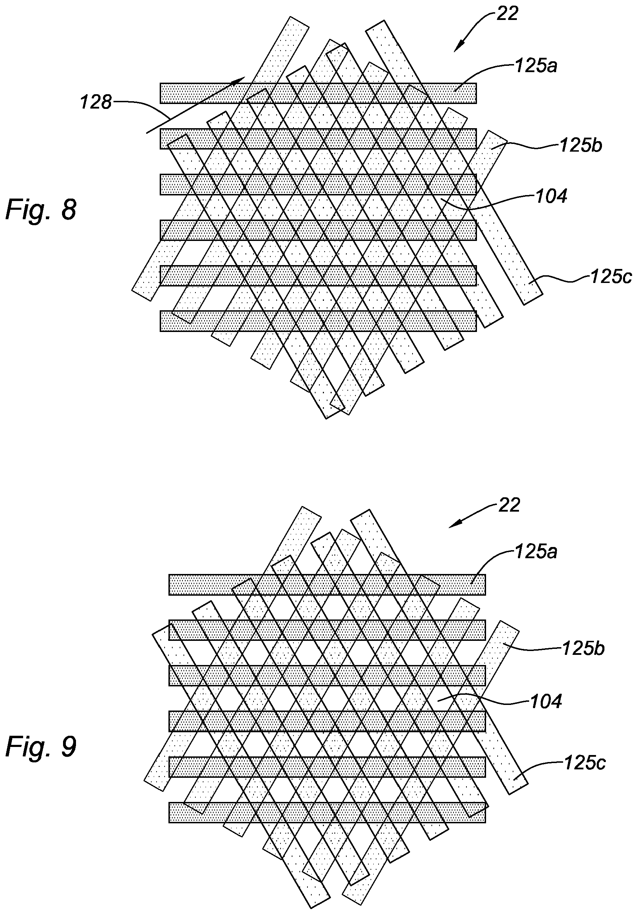

Dans le cas où l'on décale latéralement une des couches selon la direction 128, on peut obtenir un taux d'ouverture de 6,25% ou de 18,75% (voir respectivement figure 8 et figure 9), voire toute autre valeur comprise entre ces extrêmes pour des décalages intermédiaires.

Par ailleurs, comme cela est visible sur les figures 7 à 9, on peut ajuster la forme des ouvertures 104 ainsi que leur concentration par un décalage latéral. Dans le cas des figures 7 et 8, les ouvertures 104 sont sous forme de triangle, plus petit dans le cas de la figure 8. Dans le cas de la figure 9, les ouvertures 104 sont sous forme d'hexagone.

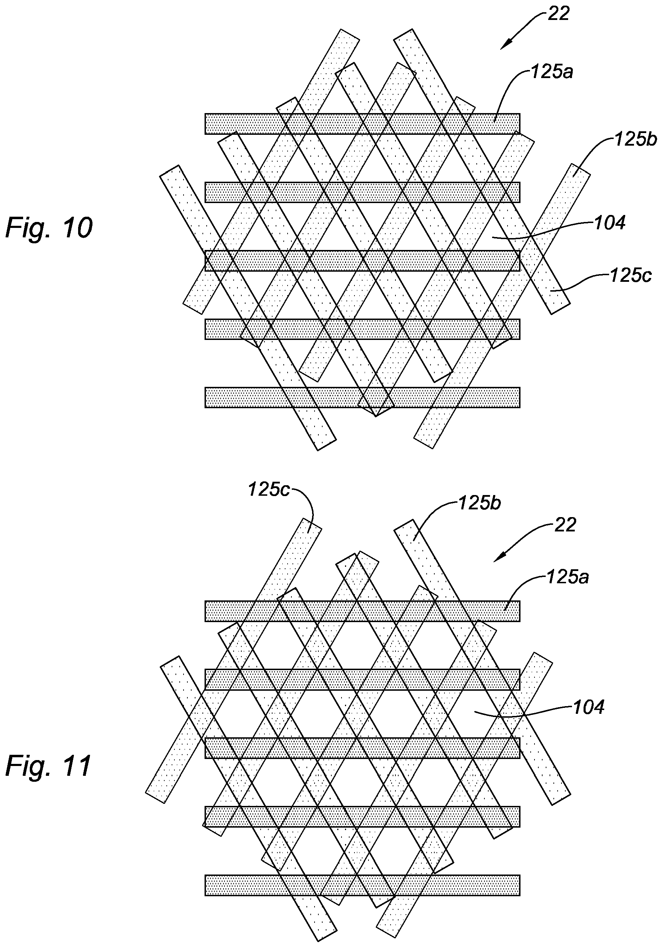

Selon une variante représentée aux figures 10 à 12, il est possible d'augmenter l'espacement entre les rubans 102. Dans le cas de ces figures, l'espacement est multiplié par deux, à savoir l'espacement correspond à la largeur de deux rubans 102.

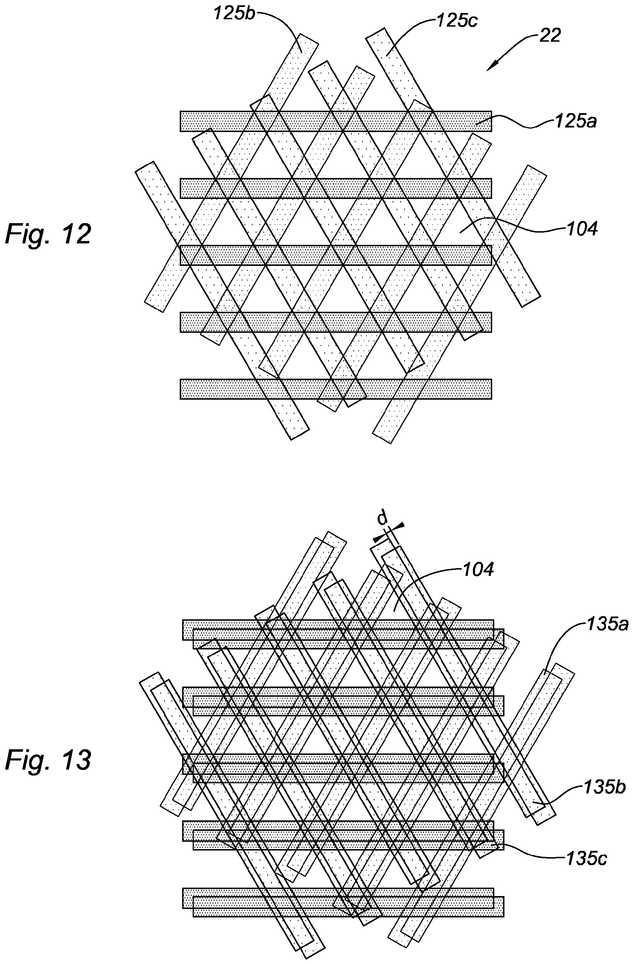

Comme indiqué plus haut, en décalant latéralement une couche 125a, 125b ou 125c, on peut faire varier la forme des ouvertures ainsi que leur concentration. De ce fait on peut obtenir un taux d'ouverture compris entre 25% et 33,33% (voir respectivement figure 10 et figure 12) et notamment un taux d'ouverture intermédiaire égale à sensiblement 27,78% (voir figure 11).

De plus, en ajoutant une couche supplémentaire d'orientation égale à l'une des couches déjà déposées et en décalant l'axe longitudinal, on peut réduire le taux d'ouverture de manière continue jusqu'à la valeur souhaitée (voir figure 13), tout en augmentant les propriétés mécaniques de la peau ainsi obtenue.

L'invention concerne également un procédé de fabrication d'une peau acoustique 22 de l'invention. Le procédé de l'invention comprend :

- l'étape A dans laquelle on dépose une multitude de couches 105, 105a ; 105b ; 115a ; 115b ; 125a ; 125b ; 125c 106, 116b, chaque couche 105, 105a ; 105b ;115a ; 115b, 125a ; 125b ; 125c 106, 116b ayant des rubans 102 espacés les uns des autres selon une même direction défini par les axes longitudinaux 107, 117a, 117b, 127a, 127b; puis
- l'étape B dans laquelle on polymérise la résine contenue dans les rubans 102 pour former la peau acoustique 22 de l'invention.

La polymérisation de la résine est réalisée par cuisson dans un four à une température comprise entre 50°C et 250°C et à une pression comprise entre 2 bar et 7 bar.

L'étape A du procédé de l'invention peut en outre comprendre :

- l'étape A1 dans laquelle on dépose des premiers rubans 102 espacés les uns des autres selon une première direction 107 ; 117a ;127a afin de former une première couche 105a ; 115a ; 125a ;
- l'étape A2 dans laquelle on dépose sur ladite première couche 105 ; 105a ; 115a ; 125a , des deuxièmes rubans 102 espacés les uns des autres selon une deuxième direction afin de former une deuxième couche 105b ; 115b ; 125b ;
- l'étape A3 dans laquelle on dépose sur la couche ainsi obtenue des rubans espacés les uns des autres selon une autre direction différente de la direction de la couche immédiatement adjacente afin de former une autre couche ;
- l'étape A4 dans laquelle on répète l'étape A3 sur les couches déjà déposées 105a ; 115a ; 125a ; 105b ; 115b ; 125b de sorte à obtenir un taux d'ouverture compris entre 8% et 20% dans la peau acoustique 22 finale.

Un taux d'ouverture compris entre 8% et 20% permet d'avoir à la fois une bonne absorption acoustique et également une bonne tenue structurale mécanique.

Le procédé selon l'invention comprend une étape supplémentaire dans laquelle on décale latéralement d'une distance d non nulle ou angulairement d'un angle non nul au moins deux couches différentes de rubans d'axe longitudinal colinéaire de sorte que les plans médians longitudinaux des rubans desdites couches soient distincts. Par exemple, sur trois couches 135a, 135b, 135c, on décale deux couches 135b, 135c de rubans d'axes longitudinaux colinéaires (voir figure 13).

Dans le cas de la figure 13, les rubans deux couches adjacentes 135a, 135b, 135c forment un angle de 60°.

Avantageusement, le décalage des rubans 102 d'une couche à l'autre de même direction permet de réduire les surépaisseurs locales au niveau des croisements des rubans 102. Ces surépaisseurs sont néfastes au bon collage de la structure à âme alvéolaire 26 sur la peau acoustique 22 de l'invention.

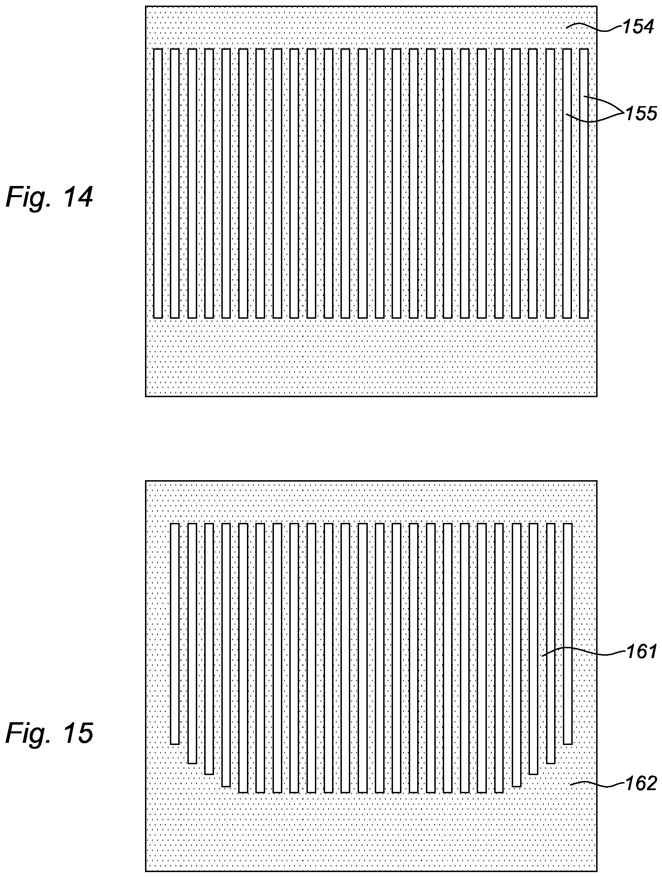

Le procédé selon l'invention peut également comprendre les étapes supplémentaires dans laquelle, sur les bordures de la peau acoustique 22, on dépose des rubans 154 juxtaposés les uns aux autres dans la direction colinéaire à l'axe longitudinal des rubans espacés puis on espace les rubans de sorte à obtenir une zone présentant des ouvertures acoustiques. Ainsi, dans la zone destinées à avoir les ouvertures acoustiques, à partir d'un certain point, on ne dépose donc plus certains rubans 154 afin de ne déposer que les rubans 155 et ainsi créer les ouvertures acoustiques décrites ci-dessus (voir figure 14).

Ceci permet de positionner les rubans 102 de manière plus aisée au début et à la fin de chaque trajectoire de dépose desdits rubans 102. Ainsi, les rubans 102 sont correctement positionnés tout au long de la trajectoire de dépose.

Une telle configuration permet également de renforcer la résistance mécanique de la peau acoustique 22 au niveau de la bordure. Il est ainsi possible de réaliser en une seule étape une peau acoustique 22 présentant une transition entre la zone acoustique 161 et la zone non acoustique 162 (voir figure 15). La transition peut avoir toute forme adaptée au besoin.

L'invention comporte en outre une tête de drapage (non représenté) pour mettre en oeuvre le procédé de l'invention, ladite tête comprenant une première partie apte à déposer des rubans 102 selon un premier espacement et une seconde partie apte à déposer des rubans 102 selon un deuxième espacement différent du premier espacement.

Plus particulièrement, les rubans 102 sont divisés en deux groupes gérés de part et d'autre de la tête. Le premier groupe est géré de sorte à présenter un espacement correspondant à un multiple entier de la largeur de rubans et le deuxième groupe présente un espacement différent, à savoir non égal à un multiple entier de la largeur des rubans. Ainsi, dans une variante, la période spatiale pour la deuxième couche est selon l'axe faisant un angle de 45° avec l'axe longitudinal des rubans de cette couche égal à environ $(2\sqrt{2}-1)$ fois la largeur du ruban.

Ainsi, lors de la réalisation d'une peau acoustique 22, le taux d'ouverture de la peau obtenue est compris entre 12,5% et 2,145% selon l'alignement des couches décalées et non décalées.

De manière avantageuse, le taux d'ouverture ainsi obtenu est homogène et périodique.

## Revendications

1. Panneau acoustique (20) pour nacelle (1) d'aéronef comprenant

   - au moins une structure (26) apte à piéger le bruit,
   - une peau pleine sans ouverture acoustique et
   - une peau acoustique (22) en contact avec ladite structure (26), ladite peau acoustique (22) comprenant un empilement d'une première série et d'au moins une deuxième série de deux couches adjacentes (105a; 105b; 105c; 105d ; 115a; 115b; 115c; 115d ; 125a; 125b; 125c ; 135a ; 135b ; 135c ; 155) de rubans (102) plans composites dirigés chacun par leur axe longitudinal (107; 117a; 117b; 127a; 127b) définissant une direction, les axes longitudinaux (107 ; 117a ; 117b ; 127a ; 127b) des rubans (102) d'une même couche (105a; 105b; 105c; 105d ; 115a; 115b; 115c; 115d; 125a; 125b; 125c; 135a; 135b; 135c ; 155) étant parallèles entre eux, lesdits rubans (102) de ladite même couche (105a ; 105b ; 105c ; 105d ; 115a ; 115b ; 115c ; 115d ; 125a ; 125b ; 125c ; 135a ; 135b ; 135c ; 155) étant espacés les uns des autres de sorte à présenter des ouvertures acoustiques (24) dans la peau acoustique (22), ladite deuxième série étant décalée angulairement ou latéralement par rapport à la première série.

2. Panneau acoustique (20) selon la revendication 1, dans laquelle les axes longitudinaux (107 ; 117a ; 117b ; 127a ; 127b) des rubans (102) de deux couches différentes (105a ; 105b ; 105c; 105d ; 115a; 115b; 115c; 115d ; 125a ; 125b ; 125c ; 135a ; 135b ; 135c ; 155) forment un angle (103 ; 113) non nul.

3. Panneau acoustique (20) selon la revendication précédente, dans laquelle l'angle (103; 113) formé entre les axes longitudinaux (107; 117a ; 117b ; 127a ; 127b) est égal à environ 60°, 45° ou 90°.

4. Panneau acoustique (20) selon l'une quelconque des revendications précédentes, dans laquelle dans chaque couche (105a ; 105b), les rubans (102) ont une largeur identique (l5a; lsb) et l'espacement (e5a; e5b) entre les rubans (102) d'une même couche (105a ; 105b) est un multiple de la largeur (l5a ; lsb) des rubans (102).

5. Panneau acoustique (20) selon l'une quelconque des revendications précédentes, dans laquelle les rubans (102) de couches différentes (105a; 105b; 125a; 125b; 125c) d'axes longitudinaux (107; 127a; 127b) parallèles sont disposés de sorte que les plans médians longitudinaux de deux rubans (102) appartenant aux deux couches différentes (105a ; 105b ;

125a ; 125b ; 125c) sont confondus.

**6.** Panneau acoustique (20) selon l'une quelconque des revendications précédentes, dans laquelle une série (114b) de plusieurs couches (115c ; 115d) est décalée angulairement par rapport à une série (114a) adjacente selon un angle (113) déterminé par rapport à la position où les plans médians longitudinaux de deux rubans (102) appartenant à deux couches (115a ; 115b ; 115c ; 115d) des deux séries (114a ; 114b) différentes sont confondus.

**7.** Panneau acoustique (20) selon l'une quelconque des revendications 1 à 5, dans laquelle une série de plusieurs couches (105c ; 105d ; 135a ; 135b ; 135c) est décalée latéralement d'une distance (d) non nulle par rapport à une série diffrérente (105a ; 105b ; 135a ; 135b ; 135c) de sorte que les plans médians longitudinaux de deux rubans (102) appartenant à deux couches des deux séries différentes soient distincts.

**8.** Panneau acoustique (20) selon l'une quelconque des revendications précédentes, dans laquelle le taux d'ouverture est compris entre 1% et 50%.

**9.** Procédé de fabrication d'un panneau acoustique (20) selon l'une quelconque des revendications 1 à 8, le procédé comprenant:

- l'étape A dans laquelle on dépose une multitude de couches (105a ; 105b ; 105c; 105d ; 115a ; 115b ; 115c; 115d ; 125a ; 125b ; 125c; 135a ; 135b ; 135c ; 155), chaque couche ayant des rubans (102) préimprégnés de résine et espacés les uns des autres selon une même direction définie par les axes longitudinaux (107 ; 117a ; 117b ; 127a ; 127b) des rubans (102); puis
- l'étape B dans laquelle on polymérise la résine contenue dans les rubans (102) de sorte à former la peau acoustique (22).

**10.** Procédé selon la revendication précédente, dans lequel l'étape A comprend :

- l'étape A1 dans laquelle on dépose des premiers rubans (102) espacés les uns des autres selon une première direction afin de former une première couche (105a; 115a; 125a; 135a);
- l'étape A2 dans laquelle on dépose sur ladite première couche (105a; 115a; 125a; 135a) des deuxièmes rubans (102) espacés les uns des autres selon une deuxième direction afin de former une deuxième couche (105b; 115b; 125b; 135b);
- l'étape A3 dans laquelle on dépose sur la couche ainsi obtenue (105b; 115b; 125b; 135b) des rubans (102) espacés les uns des autres selon une autre direction différente de la direction de la couche immédiatement adjacente afin de former une autre couche ;
- l'étape A4 dans laquelle on répète l'étape A3 sur les couches déjà déposées (105a ; 115a ; 125a ; 135a ; 105b ; 115b ; 125b ; 135b) de sorte à obtenir un taux d'ouverture compris entre 8% et 20% dans la peau acoustique finale (22).

**11.** Procédé selon les revendications 9 ou 10, comprenant une étape supplémentaire dans laquelle on décale latéralement d'une distance non nulle (d) ou angulairement d'un angle non nul au moins deux couches différentes (135b ; 135c) de rubans (102) de même direction de sorte que les plans médians longitudinaux des rubans (102) desdites couches (135a ; 135b ; 135c) soient distincts.

**12.** Procédé selon l'une quelconque des revendications 9 à 11, comprenant les étapes supplémentaires dans laquelle, sur les bordures de la peau acoustique, on dépose des rubans juxtaposés (154) les uns aux autres parallèlement à l'axe longitudinal des rubans espacés (155) puis on espace les rubans (155) de sorte à obtenir une zone présentant des ouvertures acoustiques (24).

**Patentansprüche**

**1.** Akustikplatte (20) für eine Gondel (1) eines Luftfahrzeugs, umfassend

- zumindest eine Struktur (26), die imstande ist, das Geräusch einzufangen,
- eine volle Haut ohne akustische Öffnung und
- eine akustische Haut (22) in Kontakt mit der besagten Struktur (26),

wobei die besagte akustische Haut (22) eine Stapelung aus einer ersten Reihe und aus zumindest einer zweiten Reihe von zwei angrenzenden Schichten (105a; 105b; 105c; 105d; 115a; 115b; 115c; 115d; 125a; 125b; 125c; 135a; 135b; 135c; 155) von ebenen Bändern (102) aus Verbundstoff umfasst, die jeweils durch ihre Längsachse (107; 117a; 117b; 127a; 127b) geleitet werden, die eine Richtung definiert, wobei die Längsachsen (107; 117a; 117b; 127a; 127b) der Bänder (102) einer selben Schicht (105a; 105b; 105c; 105d; 115a; 115b; 115c; 115d; 125a; 125b; 125c; 135a; 135b; 135c; 155) parallel zueinander sind, wobei die besagten Bänder (102) der besagten selben Schicht (105a; 105b; 105c; 105d; 115a; 115b; 115c; 115d; 125a; 125b; 125c; 135a; 135b; 135c; 155) derart voneinander beabstandet sind, um akustische Öffnungen (24) in der akustischen Haut (22) aufzuweisen, wobei die besagte zweite Reihe im Verhältnis zur ersten Reihe winkelig oder lateral versetzt ist.

2. Akustikplatte (20) nach Anspruch 1, wobei die Längsachsen (107; 117a; 117b; 127a; 127b) der Bänder (102) von zwei verschiedenen Schichten (105a; 105b; 105c; 105d; 115a; 115b; 115c; 115d; 125a; 125b; 125c; 135a; 135b; 135c; 155) einen Winkel (103; 113) ungleich Null bilden.

3. Akustikplatte (20) nach dem vorhergehenden Anspruch, wobei der Winkel (103; 113), der zwischen den Längsachsen (107; 117a; 117b; 127a; 127b) gebildet wird, gleich etwa 60°, 45° oder 90° ist.

4. Akustikplatte (20) nach einem der vorhergehenden Ansprüche, wobei in jeder Schicht (105a; 105b) die Bänder (102) eine identische Breite (l5a, lsb) aufweisen und der Abstand (e5a; e5b) zwischen den Bändern (102) einer selben Schicht (105a; 105b) ein Vielfaches der Breite (l5a, lsb) der Bänder (102) ist.

5. Akustikplatte (20) nach einem der vorhergehenden Ansprüche, wobei die Bänder (102) unterschiedlicher Schichten (105a; 105b; 125a; 125b; 125c) mit parallelen Längsachsen (107; 127a; 127b) derart angeordnet sind, dass die Längsmittelebenen von zwei Bändern (102), die den beiden unterschiedlichen Schichten (105a; 105b; 125a; 125b; 125c) angehören, zusammenfallen.

6. Akustikplatte (20) nach einem der vorhergehenden Ansprüche, wobei eine Reihe (114b) mehrerer Schichten (115c; 115d) im Verhältnis zu einer angrenzenden Reihe (114a) in einem Winkel (113) winkelig versetzt ist, der im Verhältnis zur Position bestimmt wird, wo die Längsmittelebenen von zwei Bändern (102), die zwei Schichten (115a; 115b; 115c; 115d) der beiden Reihen (114a; 114b) angehören, zusammenfallen.

7. Akustikplatte (20) nach einem der Ansprüche 1 bis 5, wobei eine Reihe mehrerer Schichten (105c; 105d; 135a; 135b; 135c) lateral in einem Abstand (d) ungleich Null im Verhältnis zu einer unterschiedlichen Reihe (105a; 105b; 135a; 135b; 135c) versetzt ist, sodass sich die Längsmittelebenen von zwei Bändern (102), die zwei Schichten der beiden unterschiedlichen Reihen angehören, unterscheiden.

8. Akustikplatte (20) nach einem der vorhergehenden Ansprüche, wobei die Öffnungsrate zwischen 1% und 50% enthalten ist.

9. Verfahren zur Herstellung einer Akustikplatte (20) nach einem der Ansprüche 1 bis 8, wobei das Verfahren umfasst:

- den Schritt A, bei dem man eine Vielzahl von Schichten (105a; 105b; 105c; 105d; 115a; 115b; 115c; 115d; 125a; 125b; 125c; 135a; 135b; 135c; 155) deponiert, wobei jede Schicht Bänder (102) aufweist, die mit Harz vorimprägniert, und in eine selbe Richtung voneinander beabstandet sind, die durch die Längsachsen (107; 117a; 117b; 127a; 127b) der Bänder (102) definiert wird; danach

- den Schritt B, bei dem man das Harz polymerisiert, das in den Bändern (102) enthalten ist, um die akustische Haut (22) zu bilden.

10. Verfahren nach dem vorhergehenden Anspruch, wobei der Schritt A umfasst:

- den Schritt A1, bei dem man erste Bänder (102) deponiert, die in eine erste Richtung voneinander beabstandet sind, um eine erste Schicht (105a; 115a; 125a; 135a) zu bilden;
- den Schritt A2, bei dem man auf der besagten ersten Schicht (105a; 115a; 125a; 135a) zweite Bänder (102) deponiert, die in eine zweite Richtung voneinander beabstandet sind, um eine zweite Schicht (105b; 115b; 125b; 135b) zu bilden;
- den Schritt A3, bei dem man auf die so erhaltene Schicht (105b; 115b; 125b; 135b) Bänder (102) deponiert, die in eine andere Richtung voneinander beabstandet sind, die sich von der Richtung der unmittelbar angrenzenden Schicht unterscheidet, um eine weitere Schicht zu bilden;
- den Schritt A4, bei dem man den Schritt A3 auf den bereits deponierten Schichten (105a; 115a; 125a; 135a; 105b; 115b; 125b; 135b) wiederholt, um eine Öffnungsrate, die zwischen 8% und 20% enthalten ist, in der endgültigen akustischen Haut (22) zu erhalten.

11. Verfahren nach den Ansprüchen 9 oder 10, einen zusätzlichen Schritt umfassend, bei dem man zumindest zwei unterschiedliche Schichten (135b; 135c) an Bändern (102) derselben Richtung lateral um einen Abstand ungleich Null (d) oder winkelig um einen Winkel ungleich Null verschiebt, sodass sich die Längsmittelebenen der Bänder (102) der besagten Schichten (135a; 135b; 135c) unterscheiden.

12. Verfahren nach einem der Ansprüche 9 bis 11, die zusätzlichen Schritte umfassend, bei dem man an den Rändern der akustischen Haut aneinandergelegte Bänder (154) parallel zur Längsachse der beabstandeten Bänder (155) deponiert, und man danach die Bänder (155) beabstandet, um eine Zone zu erhalten, die akustische Öffnungen (24) aufweist.

**Claims**

1. An acoustic panel (20) for an aircraft nacelle (1) comprising

    - at least one structure (26) capable of trapping noise,
    - a solid skin without acoustic opening and
    - an acoustic skin (22) in contact with said structure (26),

    said acoustic skin (22) comprising a stack of a first series and at least one second series of two adjacent layers (105a; 105b; 105c; 105d; 115a; 115b; 115c; 115d; 125a; 125b; 125c; 135a; 135b; 135c; 155) of composite flat ribbons (102) each directed by the longitudinal axis thereof (107; 117a; 117b; 127a; 127b) defining a direction, the longitudinal axes (107; 117a; 117b; 127a; 127b) of the ribbons (102) of the same layer (105a; 105b; 105c; 105d; 115a; 115b; 115c; 115d; 125a; 125b; 125c; 135a; 135b; 135c; 155) being parallel to each other, said ribbons (102) of said same layer (105a; 105b; 105c; 105d; 115a; 115b; 115c; 115d; 125a; 125b; 125c; 135a; 135b; 135c; 155) being spaced from each other so as to have acoustic openings (24) in the acoustic skin (22), said second series being shifted angularly or laterally relative to the first series.

2. The acoustic panel (20) according to claim 1, wherein the longitudinal axes (107; 117a; 117b; 127a; 127b) of the ribbons (102) of two different layers (105a; 105b; 105c; 105d; 115a; 115b; 115c; 115d; 125a; 125b; 125c; 135a; 135b; 135c; 155) form a non-zero angle (103; 113).

3. The acoustic panel (20) according to the preceding claim, wherein the angle (103; 113) formed between the longitudinal axes (107; 117a; 117b; 127a; 127b) is equal to about 60°, 45° or 90°.

4. The acoustic panel (20) according to any one of the preceding claims, wherein in each layer (105a; 105b), the ribbons (102) have an identical width (l5a; lsb) and the spacing (e5a; e5b) between the ribbons (102) of the same layer (105a; 105b) is a multiple of the width (l5a; lsb) of the ribbons (102).

5. The acoustic panel (20) according to any one of the preceding claims, wherein the ribbons (102) of different layers (105a; 105b; 125a; 125b; 125c) of parallel longitudinal axes (107; 127a; 127b) are disposed such that the longitudinal median planes of two ribbons (102) belonging to the two different layers (105a; 105b; 125a; 125b; 125c) are coincident.

6. The acoustic panel (20) according to any one of the preceding claims, wherein a series (114b) of several layers (115c; 115d) is angularly shifted relative to an adjacent series (114a) at an angle (113) determined relative to the position where the longitudinal median planes of two ribbons (102) belonging to two layers (115a; 115b; 115c; 115d) of the two different series (114a; 114b) are coincident.

7. The acoustic panel (20) according to any one of claims 1 to 5, wherein a series of several layers (105c, 105d, 135a, 135b, 135c) is shifted laterally by a non-zero distance (d) relative to a different series (105a, 105b, 135a, 135b, 135c) such that the longitudinal median planes of two ribbons (102) belonging to two layers of the two different series are distinct.

8. The acoustic panel (20) according to any one of the preceding claims, wherein the opening rate is comprised between 1% and 50%.

9. A method for manufacturing an acoustic panel (20) according to any one of claims 1 to 8, the method comprising:

    - step A in which a plurality of layers (105a; 105b; 105c; 105d; 115a; 115b; 115c; 115d; 125a; 125b; 125c; 135a; 135b; 135c; 155) is deposited, each layer having ribbons (102) pre-impregnated with resin and spaced apart from each other along a same direction defined by the longitudinal axes (107; 117a; 117b; 127a; 127b) of the ribbons (102); then
    - step B in which the resin contained in the ribbons (102) is polymerized so as to form the acoustic skin (22).

10. The method according to the preceding claim, wherein step A comprises:

    - step A1 in which first ribbons (102) spaced from each other are deposited in a first direction in order to form a first layer (105a; 115a; 125a; 135a);
    - step A2 in which second ribbons (102) spaced from each other are deposited on said first layer (105a; 115a; 125a; 135a) in a second direction in order to form a second layer (105b; 115b; 125b; 135b);
    - step A3 in which ribbons (102) spaced from each other are deposited on the layer accordingly obtained (105b; 115b; 125b; 135b) in another direction different from the direction of the immediately adjacent layer in order to form another layer;
    - step A4 in which step A3 is repeated on the layers already deposited (105a; 115a; 125a; 135a; 105b; 115b; 125b; 135b) so as to obtain an opening rate comprised between 8% and 20% in the final acoustic skin (22).

11. The method according to claim 9 or 10, comprising an additional step in which at least two different layers (135b; 135c) of ribbons (102) of the same direction are shifted laterally by a non-zero distance (d) or angularly by a non-zero angle such that the longitudinal median planes of the ribbons (102) of said layers (135a; 135b; 135c) are distinct.

12. The method according to any one of claims 9 to 11, comprising the additional steps in which, on the edges of the acoustic skin, ribbons (154) juxtaposed to each other are deposited parallel to the longitudinal axis of the spaced ribbons (155) then the ribbons (155) are spaced so as to obtain a zone having acoustic openings (24).

*Fig. 1*

Fig. 2

Fig. 3

Fig. 4

Fig. 5

*Fig. 6*

*Fig. 7*

Fig. 8

Fig. 9

*Fig. 10*

*Fig. 11*

Fig. 12

Fig. 13

Fig. 14

Fig. 15

**EP 2 504 832 B1**

## RÉFÉRENCES CITÉES DANS LA DESCRIPTION

**Documents brevets cités dans la description**

*   EP 1111584 A1